(19) Europäisches Patentamt
European Patent Office
Office européen des brevets

(11) Publication number: 0 228 879
A2

(12) # EUROPEAN PATENT APPLICATION

(21) Application number: 86309935.4

(51) Int. Cl.[4]: C08F 2/24

(22) Date of filing: 18.12.86

(30) Priority: 27.12.85 JP 295187/85
29.01.86 JP 17654/86
30.05.86 JP 125343/86
25.08.86 JP 198694/86

(43) Date of publication of application:
15.07.87 Bulletin 87/29

(84) Designated Contracting States:
AT BE CH DE ES FR GB IT LI NL SE

(71) Applicant: LION CORPORATION
3-7, Honjo 1-chome
Sumida-ku Tokyo(JP)

(72) Inventor: Morita, Hiroshi
5-4-801, Takasu 3-chome
Chiba-shi Chiba(JP)
Inventor: Hirota, Eiichi
35-7, Kitahon-cho 2-chome
Funabashi-shi§Chiba(JP)
Inventor: Ishizaki, Yasuo
19-14, Kameari 5-chome
Katsushika-ku Tokyo(JP)

(74) Representative: Fisher, Bernard et al
Raworth, Moss & Cook 36 Sydenham Road
Croydon Surrey CR0 2EF(GB)

(54) **Process for production of ultrafine polymer latex.**

(57) A ultrafine crosslinked polymer latex having a three-dimensional network structure is produced from the emulsion polymerization of (i) an ethylenically unsaturated monomer and an unsaturated monomer having a reactive functional group in the presence of a betaine ester emulsifier or (ii) an ethylenically unsaturated monomer and, optionally, an unsaturated monomer having a reactive functional group in the presence of a polyoxyalkylene ethylenically unsaturated carboxylic acid polyester emulsifier and, optionally, a betaine ester emulsifier.

EP 0 228 879 A2

# PROCESS FOR PRODUCTION OF ULTRAFINE POLYMER LATEX

## BACKGROUND OF THE INVENTION

### I. Field of the Invention

The present invention relates to a process for producing a crosslinked polymer latex from emulsion polymerization of an unsaturated monomer. More specifically, it relates to a process for producing a crosslinked polymer latex having a three-dimensional network structure.

### 2. Description of the Related Art

Heretofore, a process for producing a polymer latex by emulsion polymerization of an unsaturated monomer in the presence of an emulsifier is known, but the particle size of the polymer latex obtained by such a process is large and the film formed suffered drawbacks in that it had an inferior property such as transparency, smoothness, water resistance or solvent resistance, when compared with the film of a polymer from solvent polymerization.

To solve these problems, it has been proposed to improve the film performances by ultra-fining the particles of the polymer latex with a polymerization initiator containing a minute amount of a transition metal ion, as the accelerator, to a redox catalyst comprising a persulfate and a reductive sulfoxy compound, and by further forming an adequate three-dimensional structure in the polymer latex (see Japanese Unexamined Patent Publication (Kokai) Nos. 60-170604 and 60-170605).

In these methods, however, due to the minute amount of the transition metal ion used as the polymerization accelerator, the particle sizes of the polymer latex formed may greatly differ or the dispersing effect of the surfactant used after emulsion polymerization may be small even when an ultra-fine particle formation is possible, causing a marked increase in the viscosity of the polymer latex formed and, therefore, posing the problem that it is necessary to add, for example, aqueous ammonia or ammonium phosphate before or during polymerization.

Further, since the polymer latex is crosslinked within and/or between the particles, due to the influence of the temperature at which the film is formed, a problem arises in that the film forming property, transparency or mechanical strength of the film becomes inferior, and thus these methods are not advantageous in industrial application.

It has been also proposed to improve the water resistance of the film formed by obtaining a polymer latex by using a certain kind of polyoxyalkylene (meth)acrylic acid diester as a resin modifier (Japanese Patent Publication (Kokoku) No. 54-19905). In this method, however, film properties such as water resistance, etc., cannot be improved unless a polyoxyalkylene (meth)acrylic acid diester is used in a large amount, and further, this film had a defect in that it was sticky (had tackiness).

## SUMMARY OF THE INVENTION

Accordingly, the objects of the present invention are to eliminate the above-mentioned disadvantages of the prior art and to provide a process for producing a crosslinked polymer latex having a three-dimensional structure with which a film having an excellent film forming property, transparency, tackiness, water resistance, and mechanical strength can be formed.

Other objects and advantages of the present invention will be apparent from the following description.

In accordance with the present invention, there is provided a process for producing a crosslinked polymer latex having a three-dimensional network structure comprising the step of emulsion polymerizing an ethylenically unsaturated monomer and an unsaturated monomer having a reactive functional group in the presence of a betaine ester emulsifier or an ether carboxylic acid emulsifier.

In accordance with the present invention, there is also provided a process for producing a crosslinked polymer latex having a three-dimensional network structure comprising the step of emulsion polymerizing an ethylenically unsaturated monomer in the presence of a polyoxyalkylene ethylenically unsaturated carboxylic acid polyester emulsifier.

DESCRIPTION OF THE PREFERRED EMBODIMENTS

The ethylenically unsaturated monomer usable in the emulsion polymerization include, for example, -(meth)acrylic acid esters having the formula:

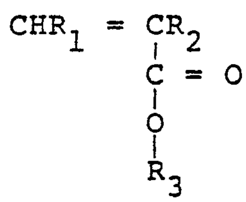

(I)

wherein $R_1$ and $R_2$ independently represent a hydrogen atom or a methyl group, and $R_3$ represents an alkyl group having l to l8 carbon atoms; or, lower fatty acid vinyl esters such as vinyl acetate, vinyl propionate, and vinyl butyrate; nitriles such as acrylonitrile and methacrylonitrile; styrenes such as styrene, α-methyl styrene, and chlorostyrene; vinyls such as vinyl chloride and vinyl bromide; vinylidenes such as vinylidene chloride and vinylidene bromide; dienes such as butadiene, chloroprene, and isoprene; and vinyl pyridine. Among these monomers, (meth)acrylic acid esters, lower fatty acid vinyl esters, and styrenes are preferably used. These monomers may be used alone or in any mixture thereof.

The unsaturated monomers having the reactive functional groups usable in the present invention include, for example, the compounds having the formula (II)-(VIII) shown below, and these monomers can be used alone or in any mixture thereof. Further, if necessary, other copolymerizable unsaturated monomers can be used in combination therewith.

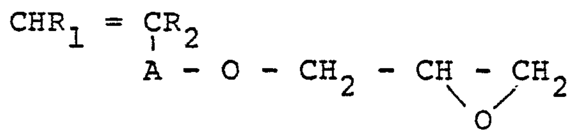

(II)

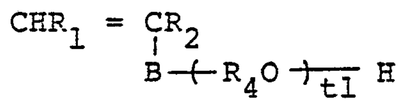

(III)

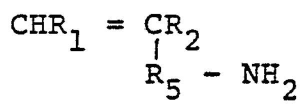

(IV)

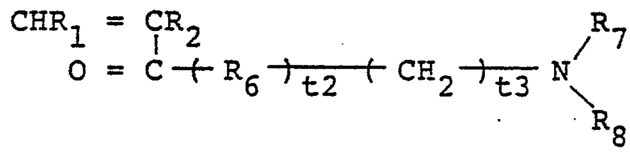

(V)

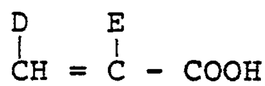

(VI)

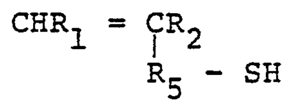

(VII)

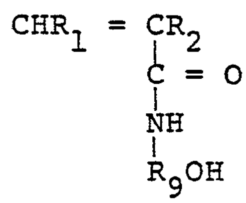

(VIII)

wherein $R_1$, $R_2$, $R_4$, $R_5$, $R_6$, $R_7$, $R_8$, B, D, E, G, $t_1$, $t_2$ and $t_3$ are as defined below.

$R_1$, $R_2$ : a hydrogen atom or a methyl group

$R_4$: an alkylene group having 2 to 4 carbon atoms

$R_5$ a direct bond, an alkylene group having l to 3 carbon atoms, a phenylene group, or a phenylene group substituted with an alkyl group having l to 20 carbon atoms or a halogene atom

$R_6$: an oxygen atom or -NH-

$R_7$: a hydrogen atom or an alkylol group having l to 5 carbon atoms

$R_8$: a hydrogen atom, an alkylol group having l to 5 carbon atoms or an alkyl group having l to 5 carbon atoms

$R_9$: an alkylene group having l to 4 carbon atoms

A: a methylene group or a carbonyl group

B: $-CH_2O-$or a carboxyl group

D: a hydrogen atom, an alkyl group having l to 3 carbon atoms, a carboxyl group, -CON 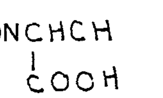 or $-CONHCONH_2$

E: a hydrogen atom, an alkyl group having l to 3 carbon atoms, or $-CH_2COOH$

$t_1$: an integer of l to 20

$t_2$: a real number of 0 or l

$t_3$: a real number of 0 to l0

In addition to the above-mentioned compounds, unsaturated monomers having no reactive functional group but convertible to a compound having an active hydrogen atom in the emulsion polymerization system also can be used.

Specific examples of the compounds represented by the formula (II), (III), (IV), (V), (VI), (VII) and (VIII) are as follows:

(i)Examples of formula (II):

Glycidyl acrylate
Glycidyl methacrylate
Glycidyl crotonate
Glycidyl allyl ether

(ii)Examples of formula (III):

Hydroxyethyl acrylate
Hydroxyethyl methacrylate
Hydroxyethyl crotonate
Hydroxypropyl acrylate
Hydroxypropyl methacrylate
Hydroxypropyl crotonate
Hydroxybutyl acrylate
Hydroxybutyl methacrylate
Polyoxyethylene monoacrylate
Polyoxyethylene monomethacrylate
Polyoxyethylene monocrotonate
Polyoxypropylene monoacrylate
Polyoxypropylene monomethacrylate
Polyoxypropylene monocrotonate
Polyoxybutylene monoacrylate
Polyoxybutylene monocrotonate
Hydroxyethyl allyl ether
Hydroxypropyl allyl ether
Hydroxybutyl allyl ether
Polyoxyethylene allyl ether
Polyoxypropylene allyl ether
Polyoxybutylene allyl ether

(iii)Examples of formula (IV):

Allylamine
Acrylamine
Methacrylamine
Aminostyrene
α-Methyl aminostyrene

(iv)Examples of formula (V):

Acrylamide
Methacrylamide
Monomethyl acrylamide
Monoethyl acrylamide
Diethylol amino propyl acrylamide
Aminopropyl methacrylamide

(v)Examples of formula (VI):

Acrylic acid
Methacrylic acid
Crotonic acid
Itaconic acid
Maleic acid, its monoester having $C_1$ -$C_5$ alkyl or its anhydride
Fumaric acid, its monoester having $C_1$ -$C_5$ alkyl, or its anhydride
Maleinealanide
Fumaralanide
N-carbamoylmaleic acid amide
N-carbamoylfumalic acid amide

(vi) Examples of formula (VII):
Methylallylthiol
Methylmercaptostyrene
(vii) Examples of formula (VIII):
N-methylolacrylic acid amide
N-methylolmethacrylic acid amide
N-methylolcrotonic acid amide
N-(2-hydroxyethyl)acrylic acid amide
N-(2-hydroxyethyl)methacrylic acid amide
N-(2-hydroxypropyl)acrylic acid amide
N-(2-hydroxypropyl)methacrylic acid amide

Although there are no critical limitations to the weight ratio of the ethylenically unsaturated monomer to the unsaturated monomer having a reactive functional group, the preferable ratio of the ethylenically unsaturated monomer/the unsaturated monomer having a reactive functional group is 99/l to 60/40, more preferably 99/l to 70/30, especially preferably 99/l to 85/l5. When this ratio is greater than 99/l, the crosslinking degree within and/or between the particles of the polymer latex formed becomes smaller. On the other hand, when this ratio is smaller than 6/4 (or 7/3), the emulsion polymerizability may be lost, whereby a large amount of agglomerated products may sometimes form, the polymer obtained may have an inferior film forming property, or cracks may form in the film obtained.

According to the present invention, the abovementioned ethylenically unsaturated monomers and the unsaturated monomers having an active hydrogen atom or a reactive functional group are polymerized in the presence of poly(meth)acroyl emulsifiers having the formula (IX), betaine ester type emulsifiers having the following formulae (X), (XI), (XII), (XIII), and (XIV), and/or ether carboxylic acid type emulsifiers having the following formula (XV), (XVI), and (XVII).

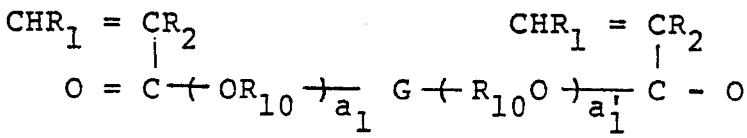

(IX)

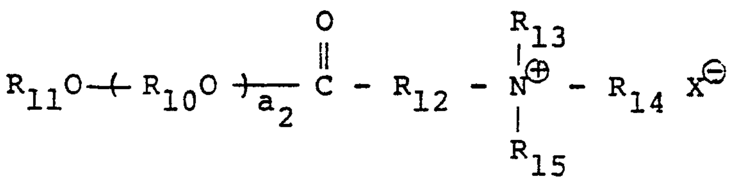

(X)

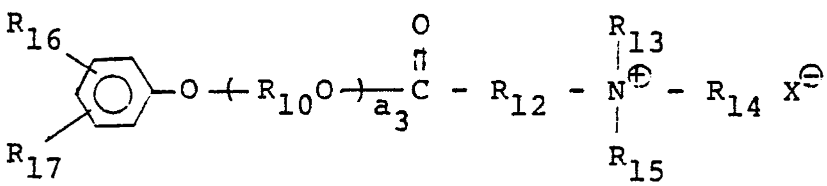

(XI)

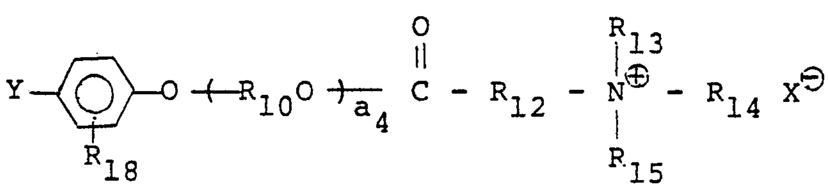

(XII)

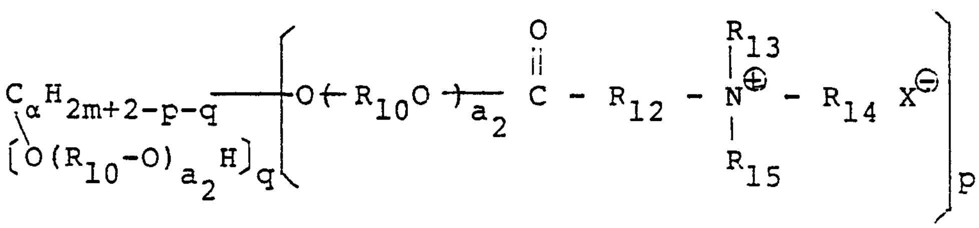

(XIII)

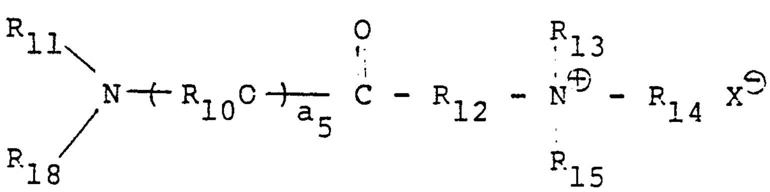

(XIV)

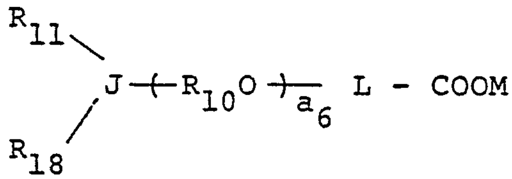 (XV)

$$R_{11} - N\left[ (R_{10}O)_{a_7} L - COOM \right]_2 \qquad (XVI)$$

$$R_{11} - (J)_{a_8} - (CH_2 - \underset{\displaystyle COOM}{CH})_{a_9} V \qquad (XVII)$$

(wherein $R_1$, $R_2$, $R_{10}$, $R_{11}$, $R_{12}$, $R_{13}$, $R_{14}$, $R_{15}$, $R_{16}$, $R_{17}$, $R_{18}$, $a_1$, $a_1'$, $a_2$, $a_3$, $a_4$, $a_5$, $a_6$, $a_7$, $a_8$, $a_9$, $a_{10}$, G, J, L, M, T, X, Y, and V are as defined below.

$R_1$, $R_2$: a hydrogen atom or a methyl group

$R_{10}$ an alkylene group having 2 to 4 carbon atoms

$R_{11}$: an alkyl group having 8 to 30 carbon atoms or an alkenyl group which may be either straight chain or branched, preferably having 8 to 18 carbon atoms

$R_{12}$: an alkylene group having 1 to 5 carbon atoms

$R_{13}$, $R_{14}$, $R_{15}$: an alkyl group having 1 to 3 carbon atoms or $-C_2H_4OH$, which may be either the same or different

$R_{16}$, $R_{17}$: an alkyl group having 6 to 20 carbon atoms or a hydrogen atom, of which at least one is an alkyl group having 6 to 20 carbon atoms

$R_{18}$: an alkyl group or an alkenyl group having 1 to 30 carbon atoms

$a_1$, $a_1'$, $a_2$, $a_3$, $a_4$, $a_5$, $a_6$, $a_7$: average addition mole numbers,

$a_1$, $a_1'$; an integer of 1 to 50 provided that $a_1 + a_1' \geq 8$

$a_2$ ; an integer of 0 to 20

$a_3$ ; an integer of 0 to 20 when either one of $R_{14}$ and $R_{15}$ is an alkyl group, an integer of 1 to 30 when either one of $R_{15}$ and $R_{16}$ is an alkyl group

$a_4$ ; an integer of 1 to 30

$a_5$ ; an integer of 0 to 20

$a_6$ ; an integer of 0 to 20

$a_7$ ; an integer of 0 to 20

$a_8$ ; a real number of 0 or 1

$a_9$ ; an integer of 2 to 20

p ; a real number of 2 to 5

q ; a real number of 0 to 3

G: 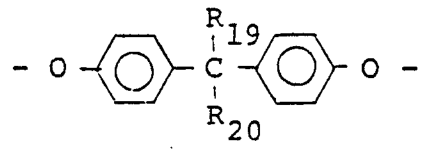 ,

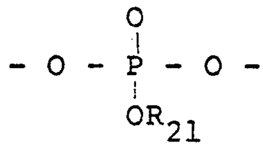

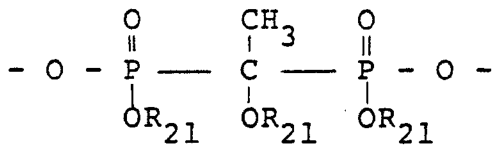 ,

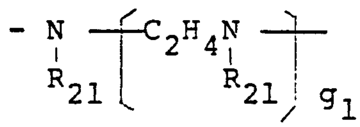 or

$-O-C_nH_{2n-g_2}-(R_{21})_{g_2}-O-$

$R_{19}$, $R_{20}$ a hydrogen atom or an alkyl group having l to 2 carbon atoms

$R_{21}$: a hydrogen atom, $-(R_{10}O)_{a_{10}}-H$ or 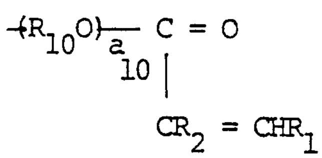

n ; a real number of l to l0
$g_1$ ; a real number of 0 to 5
$g_2$ ; a real number of 0 to l0
$a_{10}$ ; an integer of l to 50

Y: 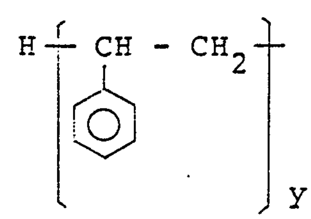 , 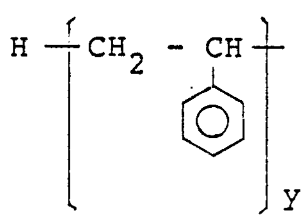 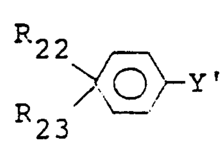

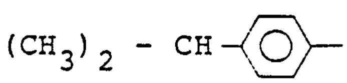 or 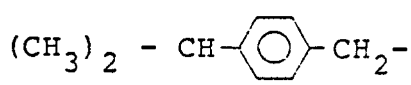

Y : an integer of l to 5
$R_{22}$ , $R_{23}$: a hydrogen atom or an alkyl group having l to 20 carbon atoms
Y': alkylene group having 3 to 8 carbon atoms, an oxygen atom or carbonyl group

J: a nitrogen atom, > CH -O -or

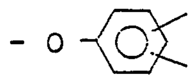

L: an alkylene group of having I to 5 carbon atoms or

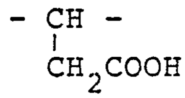

T: direct bond, an oxygen atom or sulfur
M: a hydrogen atom or an inorganic anion
X: an inorganic anion or an organic anion
V: an hydrogen atom or a halogen atom

As the emulsifiers usable in the present invention, (a) the poly(meth)acroyl type emulsifier represented by the above formula (IX), (b) the betaine ester type emulsifier represented by the formula (X), (XI), (XII), -(XIII), (XIV), and (c) the ether carboxylic acid type emulsifier represented by the above formula (XV), (XVI), -(XVII) may be used at a weight ratio of (a)/(b) = I/9 to 9/I or (a)/(c) = I/9 to 9/I, preferably at a weight ratio of I/4 to 4/I. When the ratio is smaller than I/9, the crosslinking degree within and/or between the particles of the polymer latex becomes smaller, and, when the ratio is greater than 9/I, the mean particle size of the polymer latex formed may become larger.

In the practice of the present invention, known anionic, nonionic and anionic surfactants may be also added, if desired. Examples of such surfactants are the sulfate type of higher alcohols, higher alcohol alkylene oxide addition products, alkylphenol alkylene oxide addition products, and styrenated phenol alkylene oxide addition products, olefin sulfonate type of α-olefins, quaternary ammonium salt type of respective long chain alkylamine alkylene oxide addition products and di-long chain alkylamine alkylene oxide addition products, and sodium salt of N-(I,2-dicarboxyethyl)-N-octadecylsulfonic acid monoamide, and dialkylsulfosuccinate.

When a betaine ester is used as the emulsifier in the present polymerization, the pH in the emulsion polymerization step should be adjusted to less than 6, preferably 3 to 6. When the pH is 6 or higher, a large amount of agglomerated products exhibiting physical properties greatly different from those of the polymer latex of the present invention will be undesirably formed.

Further, when the polymer latex is polymerized according to the present invention, the emulsion polymerization process known in the art can be applied as such in the presence of the unsaturated monomers and the emulsifiers mentioned above. For example, in the presence of a polymerization initiator corresponding to 0.I to 5% by weight of the unsaturated monomer, the polymer of the unsaturated monomer may be emulsified in water at a concentration of 20 to 60% by weight to carry out emulsion polymerization.

As the polymerization initiator, water-soluble single initiators or water-soluble redox initiators used in conventional emulsion polymerization may be used. Examples of such initiators may include hydrogen peroxide alone or combinations of hydrogen peroxide with carboxylic acid such as tartaric acid, citric acid, ascorbic acid, combinations of hydrogen peroxide with oxalic acid, sulfinic acid and salts thereof or oxyaldehydes, water-soluble iron salts, or otherwise peroxides such as persulfates, percarbonates, perborates, and an azo compound such as 2,2′-azobis(amidinopropane) or its salt, 2,2′-(N,N′-dimethyleneisobutylamidine) or its salt, and 4,4′-azobis(4-cyanovaleric acid) or its salt, preferably 2,2′-azobis(N,N′-dimethyl isobutylamidine) salt, and 2,2′-azobis(amidinopropane) salt.

The water-soluble nonionic polymeric materials, anionic polymeric materials, and cationic polymeric materials can be used in combination, and plasticizers and pH controllers conventionally used in the method of the prior art can be also used in combination, if desired.

Nonionic polymeric materials may include polyvinyl alcohol, dextrin, starch derivatives such as hydroxyethyl starch, hydroxypropyl starch, hydroxyethyl cellulose, and hydroxypropyl cellulose, etc.

Examples of anionic polymeric materials may include polymers such as anionized hydroxyethyl cellulose, anionized starch, anionized guar gum, anionized chitosan, carboxymethyl cellulose, and anionized polyvinyl alcohol.

On the other hand, cationic polymeric materials may be exemplified by polymers such as cationic hydroxyethyl cellulose, cationized starch, cationized guar gum, cationized chitosan and cationic (meth)-acrylic acid amide, cationic (meth)acrylic acid amide, and dimethyldiallyl ammonium chloride.

These nonionic polymeric materials, anionic polymeric materials and cationic polymeric materials can be used suitably alone or as a combination of two or more thereof, and the amount added may be 0.05 to 5% by weight, preferably 0.l to 3% by weight, based on the monomer to be emulsified.

As the plasticizer, phthalic acid esters and phosphoric acid esters, may be used. Further as the pH controller, a salt such as sodium carbonate, sodium bicarbonate, sodium acetate, can be used in combination within the range of 0.0l to 3% by weight, but desirably, are used at a pH controlled to less than 6, when a betain ester is used as the emulsifier as mentioned above.

As mentioned above, according to the present invention, the crosslinked polymer latex having excellent transparency, glossiness, water resistance, solvent resistance, film forming property, and mechanical properties can be practically advantageously produced by simple processes. Thus, the resultant polymer latex produced according to the present invention is useful as, for example, a coating material and an adhesive material.

## Examples

The present invention will now be further illustrated by, but is by no means limited to, the following Examples, wherein all parts and percentages are expressed on a weight basis unless otherwise noted.

### Example l

A glass reaction vessel provided with a thermometer, an agitator, a reflux condenser, and a dropping funnel was charged with 3 parts of an emulsifier listed in Table l and ll0 parts of water. The emulsifying agent was dissolved in the water and the system was replaced with nitrogen. Further, 65 parts of ethyl acrylate, 30 parts of methyl methacrylate, 5 parts of N-methylol acrylic amide and l part of water were mixed to separately prepare the unsaturated monomer mixture.

A l0 part amount of the unsaturated monomer mixture and 5 parts of a 5% aqueous 2,2′-azobis-(amidinopropane)hydrochloride solution were added to the reaction vessel and the polymerization was then started at a temperature of 60°C under a pH of 3 to 6. Thereafter, the remaining 90 parts of the unsaturated monomer mixture was continuously dropwise added to the reaction vessel over 90 minutes. At this time, 5 parts of a 5% aqueous 2,2′-azobis(amidinopropane)hydrochloride solution was added with a half of the above amount of the unsaturated monomer mixture. After completing the addition of the unsaturated monomer mixture, the polymerization mixture was aged at a temperature of 60°C for 90 minutes.

The polymer emulsion thus obtained was adjusted to that having a resin content of 20% and 5 g thereof was cast on a glass plate having a size of 6 cm × 8 cm and was then air dried at room temperature to form a polymer film.

The polymer latex obtained was evaluated as follows.

(l) Transparency: The haze value of the film was measured by an integration system light transmittance measuring device, (i.e., Japanese Industrial Standards).

(2) Glossiness: The 20° specular glossiness was measured according to JIS Z 874l.

(3) Water resistance: The polymer film after air drying was fully immersed in water contained in a Petri dish at a temperature of 20°C. The time interval for which newspaper typed letters having a size of 8 points could not be read was determined. The results are shown in units of hours.

(4) Solvent resistance: The polymer film after air drying was removed from a glass plate and the film was then fully immersed in benzene contained in a Petri dish at a temperature of 20°C for 48 hours. The swelling degree was determined, from the area of the film before and after the immersion, from the following formula:

$$\text{Solvent resistance (\%)} = \left(\frac{B}{A} - l\right) \times l00$$

A: Film area (6 × 8 cm) before immersion in benzene.

B: Film area after immersion in benzene.

(5) Smoothness: The surface conditions of the polymer film were visually observed and the results were evaluated according to the following standards.

o ... Smooth and glossy film

Δ ... Film having slight wrinkles and crazing

x ... Film having outstanding wrinkles and crazing The evaluation results are shown in Table I.

Table 1

| | Sample No. | Emulsifier: Chloroglycine betaine ester (alcohol residue) | Emulsifier: EOP*1 | Film property: Transparency | Film property: Glossiness | Film property: Water resistance | Film property: Solvent resistance |
|---|---|---|---|---|---|---|---|
| Example | 1 | Lauryl | 0 | 13.2 | 96 | 67 | 10.2 |
| Example | 2 | Polyoxyethylene lauryl | 3 | 5.2 | 95 | 73 | 11.8 |
| Example | 3 | Stearyl | 0 | 18.4 | 96 | 77 | 13.4 |
| Example | 4 | Polyoxyethylene stearyl | 3 | 8.9 | 97 | 69 | 14.8 |
| Example | 5 | Polyoxyethylene octylphenyl | 1 | 11.0 | 96 | 84 | 8.7 |
| Example | 6 | Polyoxyethylene dioctylphenyl | 3 | 9.2 | 96 | 80 | 10.2 |
| Example | 7 | Polyoxyethylene dodecylphenyl | 3 | 8.4 | 96 | 85 | 9.4 |
| Example | 8 | Polyoxyethylene $C_{12}$-$C_{16}$ diol | 2 | 12.3 | 95 | 91 | 11.7 |
| Example | 9 | Polyoxyethylene cumylphenyl | 3 | 8.7 | 96 | 75 | 9.1 |
| Example | 10 | Polyoxyethylene phenethylphenyl | 3 | 9.6 | 97 | 82 | 11.1 |
| | | Conventional emulsifier | EOP*1 | | | | |
| Comparative Example | 11 | Polyoxyethylene cumylphenylether | 9.7 | 16.5 | 72 | 3.4 | -*3 |
| Comparative Example | 12 | Polyoxyethylene stearylamine | 10 | 20.1 | 73 | 4.6 | -*3 |
| Comparative Example | 13 | Trimethylmonostearyl ammonium chloride | 0 | -*2 | -*2 | -*2 | -*2 |
| Comparative Example | 14 | Dimethyl distearyl ammonium chloride | 0 | -*2 | -*2 | -*2 | -*2 |

*1: Addition mole number of ethylene oxide

*2: Not determinable due to poor emulsion polymerization

*3: Not determinable due to dissolution of film in benzene

As is clear from the results shown in Table I, the sample Nos. I to I0 according to the present invention had an excellent transparency, glossiness, and water resistance and the film was insoluble had a small swelling degree, and an excellent solvent resistance. Thus, it is clear that a crosslinked polymer latex was formed. The sample Nos. II to I4 are comparative examples.

Example 2

The emulsion polymerization was carried out in the same manner as in Example I, except that chloroglycine betaine ester of 2-heptylundecyl alcohol was used as the emulsifier and a mixture of ethyl acrylate, methyl methacrylate, and N-methylol acryl acrylic amide was used as the unsaturated monomer.

The resultant polymer latex was evaluated in the same manner as in Example I.

The results are shown in Table 2.

Table 2

| Run No. | Unsaturated monomer | | | | | Film property | | | |
|---|---|---|---|---|---|---|---|---|---|
| | Kind | | | Weight ratio | | | | | |
| | Ethyl acrylate (A) | Ethyl methacrylate (B) | N-methylol acrylic amide (C) | A/B (Ratio) | C/(A+B+C) (%) | Trans-parency | Gloss-iness | Water resistance | Solvent resistance |
| 1[*1] | 68.5 parts | 31.5 parts | 0 parts | 13/6 | 0 | 23.2 | 73 | 59 | -[*2] |
| 2 | 66.4 " | 30.6 " | 3 " | " | 3 | 19.1 | 96 | 69 | 35.2 |
| 3 | 58.2 " | 26.8 " | 15 " | " | 15 | 16.4 | 95 | 70 | 15.2 |
| 4 | 51.3 " | 23.7 " | 25 " | " | 25 | 22.6 | 95 | 72 | 8.9 |
| 5[*1] | 37.5 " | 17.5 " | 45 " | " | 45 | -[*3] | -[*3] | -[*3] | -[*3] |

*1: Comparative

*2: Not determinable due to dissolution of film in benzene

*3: Not determinable due to poor film formability

Example 3

The emulsion polymerization was carried out in the same manner as in Example I, except that chloroglycine betaine ester of polyoxyethylene dinonylphenyl ether (EO $\overline{P}$ = 4) was used as an emulsifier and ethyl acrylate, methyl methacrylate, and various $\alpha,\beta$-ethylenically unsaturated carboxylic amides were used as the unsaturated monomer.

The resultant polymer latex was evaluated in the same manner as in Example I. The results are shown in Table 3. The polymer films after air drying were not soluble in benzene and acetone, as shown in Table 3. Thus, it is clear that crosslinked polymers were obtained.

Table 3

| Sample No. | Unsaturated monomer | | | | | | | | Film property | | | |
|---|---|---|---|---|---|---|---|---|---|---|---|---|
| | Kind | | | | | | Wt. Ratio | | | | | |
| | Ethyl acrylate (A) | Methyl methacrylate (B) | $CHR_1 = CHR_2$<br>\|<br>$C = O$<br>\|<br>NH<br>\|<br>$R_9OH$<br>(C) | | | | A/B ratio | C/(A+B+C) (%) | Trans-parency | Gloss-iness | Water resist-ance | Solvent resist-ance |
| | | | $C_1$ | $C_2$ | $C_9$ | Part | | | | | | |
| 1 | 70 | 25 | H | $CH_3$ | $CH_2$ | 5 | 14/5 | 5 | 7.2 | 96 | 74 | 6.3 |
| 2 | " | " | " | " | $C_2H_4$ | " | " | " | 6.2 | 97 | 77 | 5.8 |
| 3 | 75 | 20 | " | " | $CH_2$ | 7 | 15/4 | 7 | 6.5 | 98 | 85 | 4.6 |
| 4 | 70 | 25 | $CH_3$ | H | " | 5 | 14/5 | " | 7.0 | 96 | 80 | 5.5 |
| 5 | " | " | " | " | $C_2H_4$ | 7 | " | 7 | 6.6 | 97 | 83 | 4.9 |

Example 4

The emulsion polymerization was carried out in the same manner as in Example I, except that the emulsifiers listed in Table 4 were used and 40 parts of styrene, 45 parts of butyl acrylate, and 5 parts of N-methylol acrylic amide were used as the unsaturated monomer.

The polymer latex obtained above was evaluated in the same manner as in Example I. The results are shown in Table 4.

Table 4

| Sample | Emulsifier: Chloroglycine betaine ester | | Film property | | | |
|---|---|---|---|---|---|---|
| | Alcohol residue | EOP | Transparency | Glossiness | Water resistance | Solvent resistance |
| 1 | Polyoxyethylene cumylphenyl | 5 | 8.0 | 96 | 84 | 13.5 |
| 2 | " | 10 | 6.7 | 97 | 70 | 17.4 |
| 3 | Polyoxyethylene aralkyl*1 phenyl | 5 | 9.4 | 97 | 95 | 14.6 |
| 4 | " | 10 | 7.6 | 98 | 79 | 19.0 |
| 5 | Polyoxyethylene alkane ($C_{12}$-$C_{10}$) diol | 6 | 11.0 | 95 | 84 | 20.1 |
| 6 | " | 9 | 8.3 | 96 | 76 | 24.3 |

*1: aralkyl: $H\{CH(C_6H_5)-CH_2\}_2$

Example 5

The emulsion polymerization was carried out in the same manner as in Example I, except that 5 parts of the unsaturated monomer having the functional group in Table 5 was used in lieu of 5 parts of N-methylol acrylic amide.

The polymer latex obtained above was evaluated in the same manner as in Example I. The results are shown in Table 5. As is clear from the results shown in Table 5, the sample Nos. I to 9 had an extremely excellent transparency, gloss, and water resistance, and the film was insoluble in benzene had a small swelling degree, and an excellent solvent resistance. Thus, it is clear that a crosslinked polymer latex was formed. The sample Nos. I0 to I3 are comparative data.

Table 5

| Emulsifier | | | | Film property | | | |
|---|---|---|---|---|---|---|---|
| Sample No. | Chloroglycine betaine ester (alcohol residue) | $\bar{EOP}$*2 | Unsaturated monomer having active hydrogen*3 | Trans-parency | Gloss-iness | Water resist-ance | Solvent resist-ance |
| 1 | Lauryl | 0 | A | 11.4 | 97 | 57 | 11.6 |
| | | | B | 12.1 | 96 | 69 | 9.8 |
| 2 | Stearyl | 0 | A | 15.3 | 96 | 75 | 14.2 |
| | | | B | 16.2 | 96 | 82 | 11.2 |
| 3 | Polyoxyethylene stearyl | 3 | A | 7.9 | 98 | 65 | 15.6 |
| | | | B | 7.8 | 97 | 72 | 10.3 |
| 4 | Polyoxyethylene octylphenyl | 1 | A | 9.8 | 98 | 80 | 8.8 |
| | | | B | 10.4 | 97 | 87 | 7.0 |
| 5 | Polyoxyethylene dioctylphenyl | 3 | A | 8.4 | 97 | 76 | 10.7 |
| | | | B | 9.7 | 96 | 83 | 8.5 |
| 6 | Polyoxyethylene dodecylphenyl | 3 | A | 7.7 | 97 | 81 | 9.4 |
| | | | B | 9.2 | 96 | 88 | 8.2 |
| 7 | Polyoxyethylene alkane ($C_{12}$-$C_{16}$) diol | 2 | A | 10.1 | 98 | 84 | 11.9 |
| | | | B | 9.7 | 97 | 95 | 7.6 |
| 8 | Polyoxyethylene cumylphenyl | 3 | A | 8.3 | 96 | 73 | 9.0 |
| | | | B | 9.4 | 96 | 77 | 8.5 |
| 9 | Polyoxyethylene phenethylphenyl | 3 | A | 8.5 | 96 | 76 | 11.4 |
| | | | B | 9.3 | 96 | 85 | 8.3 |

Table 5 (Continued)

| Sample No. | Emulsifier: Chloroglycine betaine ester (alcohol residue) | EOP*2 | Unsaturated monomer having active hydrogen*3 | Film property: Transparency | Glossiness | Water resistance | Solvent resistance |
|---|---|---|---|---|---|---|---|
| | Conventional emulsifier | (EOP) | | | | | |
| 10*1 | Polyoxyethylene cumylphenyl ether | 9.7 | A | 15.7 | 65 | 3.5 | -*5 |
| | | | B | 18.2 | 75 | 4.0 | -*5 |
| 11*1 | Polyoxyethylene stearylamine | 10 | A | 18.9 | 70 | 4.0 | -*5 |
| | | | B | 22.3 | 77 | 5.0 | -*5 |
| 12*1 | Trimethyl monostearyl ammonium chloride | 0 | A | -*4 | -*4 | -*4 | -*4 |
| | | | B | -*4 | -*4 | -*4 | -*4 |
| 13*1 | Dimethyl distearyl ammonium chloride | 0 | A | -*4 | -*4 | -*4 | -*4 |
| | | | B | -*4 | -*4 | -*4 | -*4 |

*1: Comparative

*2: Addition mole number of ethylene oxide

*3: A ... 2-Hydroxyethyl methacrylate, B ... Glycidyl methacrylate

*4: Not determinable due to poor emulsion polymerization

*5: Not determinable due to dissolution of polymer film in benzene

## Example 6

The emulsion polymerization was carried out in the same manner as in Example l, except that chloroglycine betaine ester of 2-heptylundecyl alcohol was used as the emulsifier and a mixture of ethyl acrylate, methyl methacrylate and 2-hydroxyethyl methacrylate in the ratio listed in Table 6 was used as the unsaturated monomer.

The polymer latex obtained above was evaluated in the same manner as in Example l. The results are shown in Table 6. As is clear from the results shown in Table 6, the preferable ratio of the 2-hydroxyethyl methacrylate was 99/l to 6/4.

Table 6

| Sample No. | Unsaturated Monomer | | | | | Film Property | | | |
|---|---|---|---|---|---|---|---|---|---|
| | Kind | | | Weight ratio | | | | | |
| | Ethyl acrylate (A) | Methyl methacrylate (B) | 2-Hydroxyethyl methacrylate (C) | A/B Ratio | C/(A+B+C) % | Trans-parency | Gloss-iness | Water resistance | Solvent resistance |
| 1*1 | 68.5 parts | 31.5 parts | 0 parts | 13/6 | 0 | 23.2 | 73 | 59 | -*2 |
| 2 | 66.4 " | 30.6 " | 3 " | " | 3 | 16.1 | 95 | 65 | 36.8 |
| 3 | 58.2 " | 26.8 " | 15 " | " | 15 | 14.3 | 96 | 60 | 14.1 |
| 4 | 44.5 " | 20.5 " | 35 " | " | 35 | 24.6 | 95 | 57 | 10.2 |
| 5*1 | 37.5 " | 17.3 " | 55 " | " | 45 | -*3 | -*3 | -*3 | -*3 |

*1: Comparative

*2: Not determinable due to dissolution of film in benzene

*3: Not determinable due to poor film formability

Example 7

The emulsion polymerization was prepared in the same manner as in Example I, except that chloroglycine betaine ester of polyoxyethylene dinonyl phenyl ether (EO$\overline{P}$ = 4) was used as the emulsifier and a mixture of ethyl acrylate, methyl methacrylate, and the unsaturated monomer having the various functional groups listed in Table 7 was used.

The polymer latex obtained above was evaluated in the same manner as in Example I. The results are shown in Table 7. As is clear from the results shown in Table 7, the air drying film was insoluble in benzene and also in acetone. Thus, it is clear that the resultant polymer latex was crosslinked.

Table 7

| Sample No. | Unsaturated monomer | | | | | | | | | | Film property | | | |
|---|---|---|---|---|---|---|---|---|---|---|---|---|---|---|
| | Kind | | | | | | | | Weight Ratio | | | | | |
| | Ethyl acrylate (A) | Methyl methacrylate (B) | 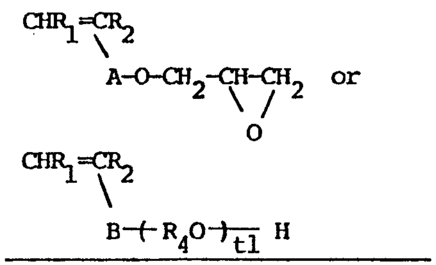 or $B-(R_4O)_{t1}-H$ | | | | | | A/B Ratio | C/(A+B+C) Ratio | Trans-parency | Gloss-iness | Water resist-ance | Solvent resist- |
| | | | $R_1$ | $R_2$ | $R_4$ | A | B | $t_1$ | | | | | | |
| 1 | 70 | 25 | H | H | - | $CH_2$ | - | - | 14/5 | 5 | 7.7 | 97 | 92 | 7.2 |
| 2 | 75 | 20 | $CH_3$ | H | - | CO | - | - | 15/4 | " | 6.6 | 98 | 102 | 6.6 |
| 3 | 70 | 25 | H | $CH_3$ | $C_2H_4$ | - | COO | 5 | 14/5 | " | 5.2 | 98 | 68 | 16.7 |
| 4 | 75 | 20 | " | " | $C_3H_6$ | - | " | 1 | 15/4 | " | 7.6 | 97 | 88 | 4.8 |
| 5 | 70 | 25 | " | " | $C_4H_8$ | - | " | 1 | 14/5 | " | 8.2 | 96 | 94 | 7.2 |
| 6 | 75 | 20 | $CH_3$ | H | $C_2H_4$ | - | " | 2 | 15/4 | " | 7.2 | 96 | 72 | 6.5 |
| 7 | 70 | 25 | H | $CH_3$ | $C_3H_6$ | - | " | 2 | 14/5 | " | 6.8 | 96 | 78 | 8 |
| 8 | 75 | 20 | " | " | $C_2H_4$ | - | $CH_2O$ | 3 | 15/4 | " | 4.7 | 98 | 67 | 12.3 |

Example 8

The emulsion polymerization was carried out in the same manner as in Example I, except that the emulsifier listed in Table 8 and a mixture of 40 parts of styrene, 50 parts of butyl acrylate, and I0 parts of 2-hydroxyethyl methacrylate were used as the emulsifier and the unsaturated monomer.

The polymer latex obtained above was evaluated in the same manner as in Example I. The results are shown in Table 8.

Table 8

| Sample | Emulsifier | | Film property | | | |
|---|---|---|---|---|---|---|
| | Chloroglycine betaine ester | | Trans parency | Gloss-iness | Water resist-ance | Solvent resist-ance |
| | Alcohol residue | $\bar{EOP}$ | | | | |
| 1 | Polyoxyethylene cumylphenyl | 5 | 8.7 | 95 | 82 | 10.1 |
| 2 | " | 10 | 6.2 | 97 | 68 | 12.3 |
| 3 | Polyoxyethylene aralkyl*1 phenyl | 5 | 7.2 | 96 | 92 | 13.4 |
| 4 | " | 10 | 5.5 | 97 | 70 | 17.2 |
| 5 | Polyoxyethylene alkane ($C_{12}$-$C_{16}$) diol | 6 | 9.9 | 95 | 92 | 14.4 |
| 6 | " | 9 | 6.1 | 96 | 68 | 20.3 |

*1: aralkyl: $H-[CH(C_6H_5)-CH_2]_2-H$

Example 9

A glass reaction vessel provided with a thermometer, an agitator, a reflux condenser, a nitrogen introduction pipe, and a dropping funnel was charged with 4 parts of an emulsifier (A) or (B):

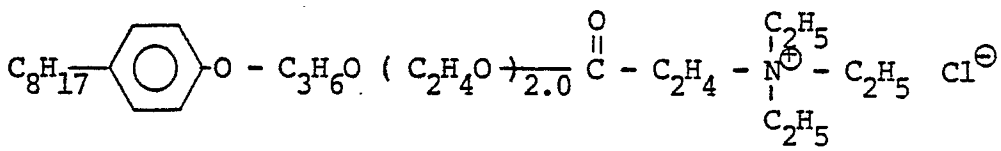 (A)

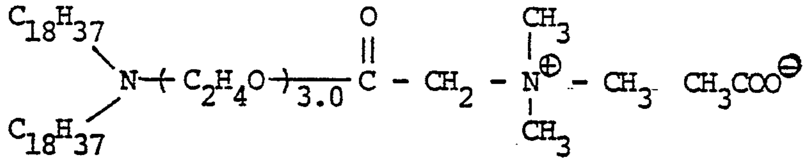 (B)

and 150 parts of water. The emulsifier was dissolved in the water and the system was replaced with nitrogen. Further, the following unsaturated monomer mixture (C) or (D):

Mixture (C)
Butyl acrylate 70 parts
Methyl acrylate 50 parts
Styrene 30 parts

Mixture (D)
Ethyl acrylate 100 parts
Methyl methacrylate 30 parts
Styrene 20 parts

and the unsaturated monomer having the functional group listed in Table 9 were mixed and 15 parts of the resultant mixture was charged to the reaction vessel and emulsified at a temperature of 40°C for 30 minutes. After heating to 65°C, the polymerization initiator, 2,2′-azobis(N,N′-dimethyleneisobutylamidine)-hydrochloride was dissolved in 50 parts of water in such an amount that the concentration became $9.0 \times 10^{-3}$ mole per liter of the aqueous phase. The resultant solution was added to the reaction vessel and, immediately thereafter, the remaining unsaturated monomer mixture was continuously dropwise added to the reaction vessel over 30 minutes, while the polymerization was carried out at a temperature of 65°C. After completing the addition of the unsaturated monomer mixture, the polymerization mixture was aged at a temperature of 65°C for 60 minutes.

The resultant polymer latex was evaluated in the same manner as in Example 1. The results are shown in Table 9.

Table 9

| Sample No. | Emulsifier | Unsaturated Monomer: Ethylene unsaturated monomer | Unsaturated Monomer: Unsaturated monomer having reactive functional group | | Film property: Trans-parency | Film property: Gloss-iness | Film property: Water resist-ance | Film property: Solvent resist-ance |
|---|---|---|---|---|---|---|---|---|
| 1 | A | C | Polyoxypropylene alkyl ether (POP̄=3) | 4.5 | 6.2 | 97 | 70 | 21.4 |
| 2 | " | " | Polyoxypropylene monoacrylate (POP̄=2) | 10.0 | 3.7 | 97 | 84 | 17.6 |
| 3 | " | " | Allylamine | 3.0 | 10.1 | 96 | 67 | 12.2 |
| 4 | " | " | Acryl amide | 4.5 | 12.8 | 95 | 92 | 18.3 |
| 5 | " | " | Itaconic acid | 3.0 | 7.2 | 96 | 68 | 13.7 |
| 6 | " | " | Maleic alamide | 5.0 | 11.2 | 95 | 75 | 14.5 |
| 7 | " | " | Methylmercapto styrene | 3.0 | 2.7 | 97 | 90 | 13.8 |
| 8 | B | " | Polyoxyethylene monolaurate (EOP̄=3) | 7.5 | 4.5 | 97 | 71 | 21.3 |
| 9 | " | " | Acrylamine | 4.5 | 11.8 | 95 | 77 | 16.2 |
| 10 | " | " | Methylallyl thiol | 3.0 | 9.2 | 97 | 85 | 14.7 |
| 11 | " | D | Clycidyl methacrylate | 4.5 | 9.9 | 96 | 69 | 21.3 |
| 12 | " | " | Hydroxypropyl monomethacrylate | 6.0 | 7.2 | 97 | 71 | 16.9 |
| 13 | " | " | Methylmercapto styrene | 3.0 | 7.6 | 96 | 80 | 15.6 |
| 14 | " | " | Diethylol aminopropyl acrylamide | 7.5 | 3.2 | 97 | 70 | 20.1 |
| 15 | " | " | Polyoxyethylene allyl ether (EOP̄=5) | 3.0 | 11.2 | 95 | 68 | 18.8 |

Table 9 (Continued)

| Sample No. | Emulsifier | Unsaturated Monomer | | | Film property | | | |
|---|---|---|---|---|---|---|---|---|
| | | Ethylene unsaturated monomer | Unsaturated monomer having reactive functional group | | Trans-parency | Gloss-iness | Water resist-ance | Solvent resist-ance |
| 16 | A | D | Aminostyrene | 7.5 | 4.1 | 97 | 95 | 10.5 |
| 17 | " | " | Monomethylaminopropyl acrylamide | 4.5 | 8.6 | 96 | 74 | 19.8 |
| 18 | " | " | Monomethyl maleate | 3.0 | 13.4 | 95 | 67 | 20.5 |
| 19 | " | " | Methacrylic acid | 3.0 | 6.7 | 97 | 82 | 11.7 |
| 20 | " | " | Fumaric alamide | 4.5 | 9.5 | 96 | 69 | 23.4 |

Example I0

A glass reaction vessel provided with a thermometer, an agitator, a reflux condenser, a nitrogen introducing pipe, and a dropping funnel was charged with 6 parts of an emulsifier listed in Table I0 and I50 parts of water. The emulsifier was dissolved in the water and the system was replaced with nitrogen. Further, 90 parts of ethyl acrylate and 60 parts of methyl methacrylate were mixed to separately prepare I50 parts of the unsaturated monomer mixture.

A I5 part amount of the unsaturated monomer mixture was charged to the reaction vessel and emulsified at a temperature of 40°C for 30 minutes. After heating to 60°C, a redox type of an equimolar mixture of potassium persulfate and sodium thiosulfate (3.0 $\times$ $10^{-3}$ mole per liter of the aqueous phase) and a trace amount of copper sulfate (5.0 $\times$ $10^{-5}$ mole per liter of the aqueous phase) were dissolved in 50 parts of water. The resultant solution was added to the reaction vessel and, the remaining unsaturated monomer mixture was continuously dropwise added to the reaction vessel over 30 minutes, while the polymerization was carried out at a temperature of 60°C. After completing the addition of the unsaturated monomer mixture, the polymerization mixture was aged at a temperature of 60°C for 60 minutes.

The polymer emulsion thus obtained was adjusted to that having a resin content of 20% and 5 g thereof was cast on a glass plate having a size of 6 cm $\times$ 8 cm, and then air dried at room temperature to form a polymer film.

The evaluation results are shown in Table I0.

As is clear from the results shown in Table I0, the sample Nos. I to I0 according to the present invention had an excellent transparency, gloss, and water resistance and the film was insoluble in benzene, and had a small swelling degree and an excellent solvent resistance. Thus, it was confirmed that the resultant polymer latex was crosslinked.

Table 10

| Sample No. | | Emulsifier according to the present invention | | | | | | Film Property | | | |
|---|---|---|---|---|---|---|---|---|---|---|---|
| | | 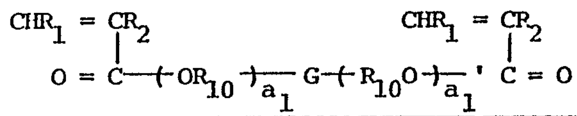 | | | | | | Trans-parency | Gloss-iness | Water resistance | Solvent resist-ance |
| | | $R_1$ | $R_2$ | $R_{10}$ | $a_1$ | $a_1'$ | G | | | | |
| Example | 1 | H | H | $C_2H_4$ | 25 | 25 | $-OC_2H_4O-$ | 12.0 | 91 | 168 or more | 22.1 |
| | 2 | H | $CH_3$ | $C_3H_6$ | 3 | 3 | $-OC_3H_6O-$ | 9.5 | 89 | " | 28.6 |
| | | | | $C_2H_4$ | 12 | 12 | | | | | |
| | 3 | H | H | $C_2H_4$ | 16 | 16 | 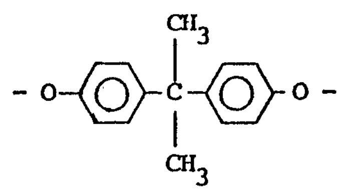 | 13.3 | 86 | " | 18.0 |
| | 4 | H | H | $C_3H_6$ | 1 | 1 | | 12.5 | 87 | " | 21.5 |
| | | | | $C_2H_4$ | 9 | 9 | | | | | |
| | 5 | H | $CH_3$ | $C_2H_4$ | 9 | 9 | 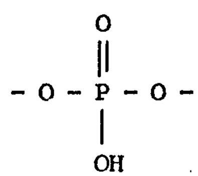 | 15.4 | 90 | " | 22.0 |
| | 6 | H | $CH_3$ | $C_3H_6$ | 2 | 2 | | 11.8 | 88 | " | 10.3 |
| | | | | $C_2H_4$ | 12 | 12 | | | | | |
| | 7 | $CH_3$ | H | $C_2H_4$ | 5 | 5 | 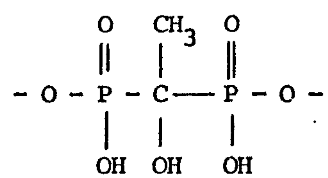 | 15.6 | 79 | " | 27.2 |
| | 8 | H | H | $C_3H_6$ | 8 | 8 | | 11.7 | 91 | " | 16.2 |
| | | | | $C_2H_4$ | 8 | 8 | | | | | |

Table 10 (Continued)

| Sample No. | | Emulsifier according to the present invention 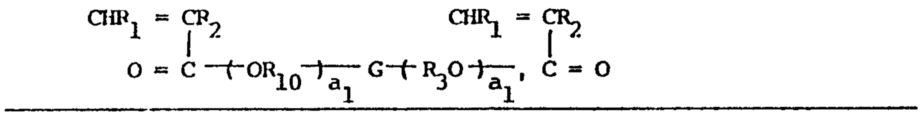 R1 | R2 | R10 | a1 | a'1 | G | EOP | POP | Film Property: Trans-parency | Gloss-iness | Water resistance | Solvent resist-ance |
|---|---|---|---|---|---|---|---|---|---|---|---|---|---|
| Example | 9 | H | H | $C_3H_6$<br>$C_2H_4$ | 1.8<br>4.5 | 1.8<br>4.5 | 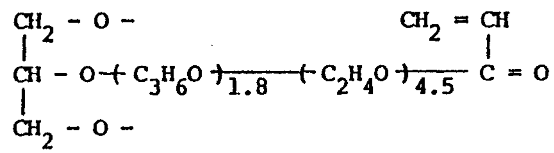 | | | 10.5 | 86 | 168 or more | 17.8 |
| Example | 10 | H | H | $C_3H_6$<br>$C_2H_4$ | 8.3<br>5.7 | 8.3<br>5.7 | 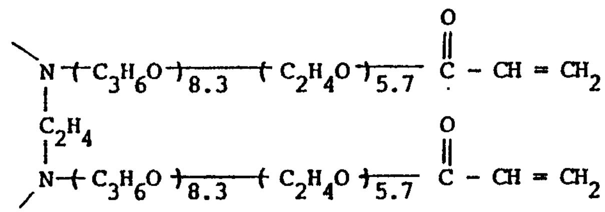 | | | 12.4 | 83 | " | 24.4 |
| | | Conventional emulsifier | | | | | | EOP | POP | | | | |
| Comparative Example | 11 | Polyoxyethylene nonylphenyl ether | | | | | | 13 | 0 | 6.5 | 95 | 3 | *2 |
| Comparative Example | 12 | Polyoxypropylene polyoxyethylene glycol (Pluronic type emulsifier) | | | | | | 30 | 26 | 11.8 | 84 | 5 | *2 |
| Comparative Example | 13 | Polyoxyethylene methacrylic monoester | | | | | | 16 | 0 | *1 | *1 | *1 | *2 |
| Comparative Example | 14 | Polyoxyethylene laurylether sulfate Na salt | | | | | | 3 | 0 | 32.0 | 82 | 4 | *2 |
| Comparative Example | 15 | Polyoxyethylene polyoxypropylene -P,R'-isopropylidene diphenylether | | | | | | 1 | 9 | 12.8 | 78 | 3 | *2 |

*1: Not determinable due to poor emulsion polymerization

*2: Not determinable due to dissolution of film in benzene

Example II

A glass reaction vessel provided with a thermometer, an agitator, a reflux condenser, a nitrogen feed pipe, and a dropping funnel was charged with 40 parts of a chloroglycine betaine ester type emulsifier, 40 parts of polyoxyalkylene ethylenically unsaturated carboxylic acid diester type emulsifier listed in Table II, and I50 parts of water. The emulsifying agent was dissolved in the water, while the system was replaced with nitrogen. Further, 90 parts of ethyl acrylate and 60 parts of methyl methacrylate were mixed to separately prepare I50 parts of the unsaturated monomer mixture.

A I5 part amount of the unsaturated monomer mixture was charged to the reaction vessel and emulsified at a temperature of 40°C for 30 minutes. After heating to 60°C, the polymerization initiator, 2,2'-amidinopropane hydrochloride was dissolved in 50 parts of water in an amount such that the concentration became $9.0 \times 10^{-3}$ mole per liter of the aqueous phase. The resultant solution was added to the reaction vessel and the remaining unsaturated monomer mixture was continuously dropwise added to the reaction vessel over 30 minutes and the polymerization was carried out for 30 minutes. After completing the addition of the unsaturated monomer mixture, the polymerization mixture was aged at a temperature of 60°C for 60 minutes.

The resultant polymer latex was evaluated in the same manner as in Example I. The results are shown in Table II.

As is clear from the results shown in Table II, the sample Nos. I to I2 according to the present invention had excellent transparency, gloss, and water resistance and the film was insoluble in benzene, had a small swelling degree, and an excellent solvent resistance. Thus, it was confirmed that the resultant polymer latex was crosslinked.

Table 11

| No. | Emulsifier: Alcohol residue of chloroglycine betaine ester emulsifier (a) | 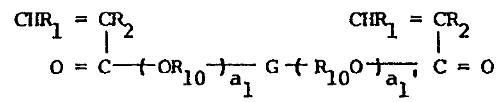 EOP | R1 | R2 | R10 | G | a1 | a1' | Film property: Transparency | Glossiness | Water resistance | Solvent resistanc |
|---|---|---|---|---|---|---|---|---|---|---|---|---|
| 1 | Lauryl | 0 | H | H | $C_2H_4$ | $- OC_2H_4O -$ | 25 | 25 | 9.0 | 97 | 168 or more | 28.1 |
| 2 | Polyoxyethylene lauryl | 3 | " | $CH_3$ | $C_3H_6$ | $- O - C_3H_6 - O$ | 3 | 3 | 5.5 | 95 | " | 33.2 |
| | | | | | $C_3H_4$ | | 12 | 12 | | | | |
| 3 | Polyoxyethylene stearyl | 3 | H | H | $C_3H_6$ | 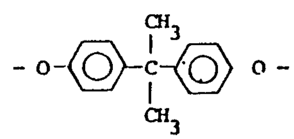 | 1 | 1 | 8.5 | 96 | " | 26.5 |
| | | | | | $C_2H_4$ | | 9 | 9 | | | | |
| 4 | Polyoxyethylene octylphenyl | 1 | " | " | $C_2H_4$ | | 16 | 16 | 10.0 | 96 | " | 21.8 |
| 5 | Polyoxyethylene cumylphenyl | 3 | $CH_3$ | " | " | | 11 | 11 | 8.2 | 95 | " | 18.4 |
| 6 | Polyoxyethylene phenethylphenyl | 3 | H | $CH_3$ | " | 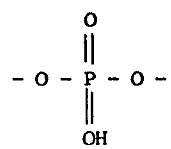 | 9 | 9 | 7.9 | 95 | " | 25.3 |
| 7 | Polyoxyethylene dodecylphenyl | 3 | " | " | $C_3H_6$ | | 2 | 2 | 8.3 | 97 | " | 13.7 |
| | | | | | $C_2H_4$ | | 12 | 12 | | | | |
| 8 | Stearyl | 0 | $CH_3$ | H | $C_2H_4$ | 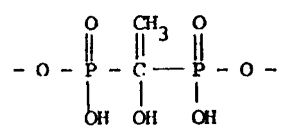 | 5 | 5 | 12.1 | 95 | " | 41.9 |
| 9 | Polyoxyethylene dioctylphenyl | 3 | H | " | " | | 12 | 12 | 8.0 | 97 | " | 15.5 |

Table 11 (Continued)

| No. | Alcohol residue of chloroglycine betaine ester emulsifier (a) | Emulsifier 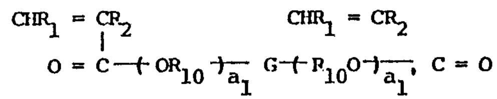 EOP | $R_1$ | $R_2$ | $R_{10}$ | G | $a_1$ | $a_1'$ | Film property: Transparency | Glossiness | Water resistance | Solvent resistanc |
|---|---|---|---|---|---|---|---|---|---|---|---|---|
| 10 | Polyoxyethylene alkane ($C_{12}$-$C_{16}$) diol | 2 | H | H | $C_3H_6$ $C_2H_4$ | $- C_2H_4 -$ | 8 | 8 | 8.2 | 95 | 138 | 10.6 |
| 11 | Polyoxypropylene ($\overline{POP}$ = 1) polyoxyethylene octylphenyl | 2 | H | $CH_3$ | $C_3H_6$ $C_2H_4$ | 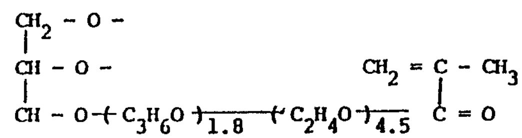 | 1.8 4.5 | 1.8 4.5 | 5.7 | 95 | " | 18.9 |
| 12 | 2-Hepthylundecyl | 0 | H | H | $C_3H_6$ $C_2H_4$ | 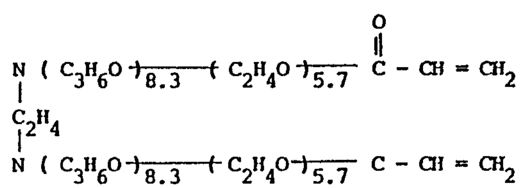 | 8.3 5.7 | 8.3 5.7 | 4.1 | 96 | " | 27.9 |

Example 12

The emulsion polymerization was carried out in the same manner as in Example 11, except that 75 parts of butyl acrylate and 75 parts of methyl methacrylate were used as the ethylenically unsaturated monomer, and (a) the chloroglycine betaine ester of polyoxyethylene oxypropylene octylphenyl ether ($PO\bar{P} = 1$, $EO\bar{P} = 2$) and (b) the acrylic diester of polyoxyethylene-polyoxypropylene glycol ($PO\bar{P} = 17$, $EO\bar{P} = 30$) in the ratio shown in Table 12 were used as the emulsifier.

The resultant polymer latex was evaluated in the same manner as in Example 1. The results are shown in Table 12. The sample Nos. 1 to 6 are Examples according to the present invention and the sample No. 7 is a Comparative Example.

Table 12

| Sample No. | Emulsifier (a) parts | Emulsifier (b) parts | Emulsifier (a)/(b) Weight Ratio | Film Property Transparency | Film Property Glossiness | Film Property Water-resistance | Film Property Solvent-resistance |
|---|---|---|---|---|---|---|---|
| 1 | 0 | 8.0 | 0/10 | 15.4 | 86 | 168 or more | 18.9 |
| 2 | 0.8 | 7.2 | 1/9 | 7.2 | 95 | " | 21.3 |
| 3 | 2.4 | 5.6 | 3/7 | 6.8 | 95 | " | 37.6 |
| 4 | 4.0 | 4.0 | 5/5 | 6.5 | 96 | " | 50.8 |
| 5 | 5.6 | 2.4 | 7/3 | 5.9 | 96 | " | 72.1 |
| 6 | 7.2 | 0.8 | 9/1 | 4.1 | 96 | " | 176.2 |
| 7 | 8.0 | 0 | 10/0 | 3.0 | 96 | 72 | - *1 |

*1 Not determinable due to dissolation of film in benzene

Example 13

The emulsion polymerization was carried out in the same manner as in Example 11, except that 7.0 parts of the chloroalanine betaine ester of polyoxyethylene diphenyl ether (EO$\overline{P}$ = 5) and 3.0 parts of the acrylic diester of isopropylidene diphenyl ether (PO$\overline{P}$ = 2, EO$\overline{P}$ = 20) were used as the emulsifier and 150 parts of the ethylenically unsaturated monomer mixture listed in Table 13 were used.

The resultant polymer latex was evaluated in the same manner as in Example 1. The results are shown in Table 13.

Table 13

| Sample No. | Unsaturated monomer | | | | Film Property | | | |
|---|---|---|---|---|---|---|---|---|
| | Ethyl acrylate (parts) | Butyl acrylate (parts) | Methyl methacrylate (parts) | Styrene (parts) | Transparency | Gloss-iness | Water-resistance | Solvent-resistance |
| 1 | 75 | - | 75 | - | 5.8 | 96 | 168 or more | 22.4 |
| 2 | - | 67 | - | 83 | 6.7 | 95 | " | 38.2 |
| 3 | - | 60 | 90 | - | 7.2 | 95 | " | 19.7 |
| 4 | 105 | - | 45 | - | 4.0 | 97 | " | 24.3 |
| 5 | 110 | - | - | 40 | 6.3 | 95 | " | 36.7 |

Example 14

A glass reaction vessel provided with a thermometer, an agitator, a reflux condenser, a nitrogen feed pipe, and a dropping funnel was charged with 4 parts of chloroglycine betaine polyoxyethylene nonylphenyl ether ester (EO$\overline{P}$ = 3) and 2 part of polyoxyethylene p,p′-isopropylidene diphenyl ether dimethacrylate - (EO$\overline{P}$ = 25) as the emulsifier and 150 parts of water. The emulsifier was dissolved in the water and the system was replaced with nitrogen. Further, 90 parts of ethyl acrylate and 60 parts of methyl methacrylate were mixed to separately prepare 150 parts of the unsaturated monomer mixture.

A 15 part amount of the unsaturated monomer mixture was charged to the reaction vessel and emulsified at a temperature of 40°C for 30 minutes. After heating to 60°C, the polymerization initiator, 2,2′-azobis(N,N′-dimethyleneisobutylamidine)hydrochloride was dissolved in 50 parts of water in an amount such that the concentration became $9.0 \times 10^{-3}$ mole per liter of the aqueous phase. The resultant solution was added to the reaction vessel and, immediately thereafter, the remaining unsaturated monomer mixture was continuously dropwise added to the reaction vessel over 30 minutes, while the polymerization was carried out at a temperature of 60°C. After completing the addition of the unsaturated monomer mixture, the polymerization mixture was aged at a temperature of 60°C for 60 minutes.

The particle sizes and the film forming properties of the resultant polymer latexes were evaluated in the same manner as in Example 1. The results are as shown in Table 14. As is clear from the results shown in Table 14, the preferable emulsion temperature is 70°C or less.

Table 14

| Sample No. | Polymerization temp. (°C) | Particle size (nm) | Film Property | | | |
|---|---|---|---|---|---|---|
| | | | Transparency | Gloss-iness | Water-resistance | Solvent-resistance |
| 1 | 50 | 46 | 2.0 | 98 | 168 or more | 85.4 |
| 2 | 60 | 50 | 3.0 | 97 | " | 78.3 |

Example l5

The emulsion polymerization was carried out in the same manner as in Example l4, except that 4 parts of chloroglycine betaine oxypropylene polyoxyethylene dodecylphenyl ether ester (PO $\overline{P}$ = l, EO $\overline{P}$ = 3) and 4 parts of polyoxypropylene polyoxyethylene p,p'-isopropylidene diphenyl ether diacrylate (PO $\overline{P}$ = 3, EO $\overline{P}$ = l2) were used as the emulsifier, and 60 parts of butyl acrylate, 90 parts of methyl methacrylate, and the unsaturated monomer having the reactive functional group listed in Table l5 were used as the unsaturated monomer mixture.

The resultant polymer latex was evaluated in the same manner as in Example l. The results are shown in Table l5.

Table 15

| Sample No. | Unsaturated monomer having reactive functional group: Kind | Parts | Particle size (nm) | Film Property: Transparency | Glossiness | Water-resistance | Solvent-resistance |
|---|---|---|---|---|---|---|---|
| 1 | N-methylol acrylic amide | 1.5 | 45 | 2 | 98 | 168 or more | 17.3 |
| 2 | Glycidyl methacrylate | 7.5 | 56 | 6 | 96 | " | 23.1 |
| 3 | 2-Hydroxyethyl methacrylate | 3.0 | 47 | 3 | 97 | " | 12.4 |
| 4 | Acrylamine | 4.5 | 52 | 5 | 96 | " | 26.8 |
| 5 | Acrylamide | 4.5 | 53 | 4 | 96 | " | 32.4 |
| 6 | Methacrylic acid | 3.0 | 44 | 7 | 95 | " | 22.5 |
| 7 | Methylallyl thiol | 3.0 | 45 | 5 | 96 | " | 18.3 |

Example I6

A I57 parts amount of unsaturated monomers comprising 8.0 parts of an emulsifier shown in Table I6, 90 parts of ethyl acrylate, 60 parts of methyl methacrylate, 4.5 parts of N-methylolacrylic acid amide, and 2.5 parts of water and polymerization initiators of potassium persulfate (to 3.0 $\times$ $I0^{-3}$ mol/liter aqueous phase), sodium thiosulfate (to 3.0 $\times$ $I0^{-3}$ mol/liter-aqueous phase) and copper sulfate (to 5.0 $\times$ $I0^{-5}$ mol/liter-aqueous phase) were dissolved in 47.5 parts of water, and emulsion polymerization was carried out in the same manner as in Example I to prepare a polymer latex.

The polymer latex obtained above was evaluated in the same manner as in Example I. The results are shown in Table I6.

Table 16

| Sample No. | Emulsifier | Amount (paths) | Film Property | | | |
|---|---|---|---|---|---|---|
| | | | Transparency | Gloss-iness | Water resistance | Solvent resistance |
| 1 | 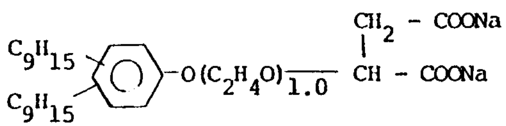 | 4.0 | 2.7 | 98 | 168 or more | 28.4 |
| | Dimethacrylic ester of polyoxypropylene polyoxyethylene glycol ($\overline{POP}$ = 3, $\overline{EOP}$ = 12) | 4.0 | | | | |
| 2 | 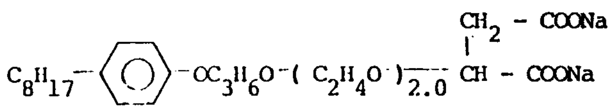 | 4.0 | 3.0 | 97 | " | 24.9 |
| | Diacrylic ester of polyoxypropylene polyoxyethylene bisphenol A ether ($\overline{POP}$ = 2, $\overline{EOP}$ = 9) | 4.0 | | | | |
| 3 | 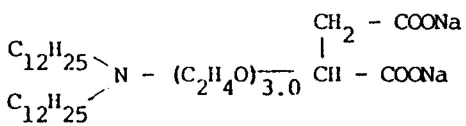 | 6.0 | 3.2 | 97 | " | 16.7 |
| | Dimethacrylic ester of polyoxyethylene glycol ($\overline{EOP}$ = 14) | 2.0 | | | | |
| 4 | 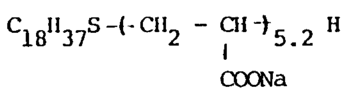 | 6.0 | 2.6 | 98 | " | 29.7 |
| | Dimethacrylic acid ester of polypropylene polyoxyethylene ($\overline{POP}$ = 8.3, $\overline{EOP}$ = 5.7) | 2.0 | | | | |

## Claims

1. A process for producing a crosslinked polymer latex having a three-dimensional network structure comprising the step of emulsion polymerizing an ethylenically unsaturated monomer and an unsaturated monomer having a reactive functional group in the presence of a betaine ester emulsifier or an ether carboxylic acid emulsifier.

2. A process as claimed in claim 1, wherein the unsaturated monomer is a compound having an active hydrogen atom.

3. A process as claimed in claim 1, wherein the unsaturated monomer is a compound having at least one group selected from the group consisting of an epoxy, hydroxy, amino, amide, carboxyl, and thiol groups.

4. A process as claimed in claim 3, wherein the unsaturated monomer having an epoxy group as a reactive functional group has the following formula:

$$CHR_1 = CR_2$$
$$A - O - CH_2 - CH - CH_2 \qquad (II)$$
$$O$$

wherein $R_1$ and $R_2$ independently represent a hydrogen atom or a methyl group and A represents methylene or carbonyl.

5. A process as claimed in claim 3, wherein the unsaturated monomer having a hydroxyl group as a reactive functional group has the following formula:

$$CHR_1 = CR_2$$
$$B \leftarrow ( R_4O \rightarrow)_{t1} H \qquad (III)$$

wherein $R_1$ and $R_2$ independently represent a hydrogen atom or methyl group and $R_4$ represents an alkylene group with 2 to 4 carbon atoms and B represents $-CH_2O-$or carboxyl, and $t_1$ is an integer of 1 to 20.

6. A process as claimed in claim 3, wherein the unsaturated monomer having an amide group is an N-alkylol derivative of $\alpha,\beta$-ethylenically unsaturated carboxylic amide having the formula:

$$CHR_1 = CR_2$$
$$C = O \qquad (VIII)$$
$$NH$$
$$R_9OH$$

wherein $R_1$ and $R_2$ independently represent a hydrogen atom or methyl group and $R_9$ represents an alkylene group with 1 to 4 carbon atoms.

7. A process for producing a crosslinked polymer latex having a three-dimensional network structure comprising the step of emulsion polymerizing an ethylenically unsaturated monomer in the presence of a polyoxyalkylene ethylenically unsaturated carboxylic acid polyester emulsifier.

8. A process as claimed in claim 7, wherein a betaine ester emulsifier is used in combination with the polyoxyalkylene ethylenically unsaturated carboxylic acid polyester emulsifier.

9. A process as claimed in claim 7, wherein 1% to 60% by weight, based on the total weight of the monomer, of an unsaturated monomer having a reactive functional group is used as a reactive monomer.

10. A process as claimed in claim 9, wherein the unsaturated monomer is a compound having at least one member selected from the group consisting of an active hydrogen atom and an epoxy, hydroxyl, amino, amide, carboxyl, and thiol groups.

11. A process as claimed in claim 7, wherein the polyoxyalkylene ethylenically unsaturated carboxylic acid polyester emulsifier have the formula (XIV) or (XV).

12. A process as claimed in claim 7, wherein the emulsion polymerization is carried out at a temperature of 70°C or less by using an azo compound as a polymerization initiator.